# EUROPÄISCHE PATENTSCHRIFT

(11) **EP 2 548 841 B1**
(45) Veröffentlichungstag und Bekanntmachung des Hinweises auf die Patenterteilung: **06.01.2016**
(21) Anmeldenummer: 12173560.9
(22) Anmeldetag: 26.06.2012
(51) Int. Cl.: C01B 25/45, H01M 4/58, H01M 10/0525, H01M 4/1397, H01M 4/36, H01M 4/136, H01M 10/052

(54) **Aktivmaterial für eine Elektrode eines galvanischen Elements**
Active material for an electrode of a galvanic element
Matériau actif pour une électrode d'un élément galvanique

(30) Priorität: 19.07.2011 US 201161509124 P
(43) Veröffentlichungstag der Anmeldung: 23.01.2013
(73) Patentinhaber: LITRONIK Batterietechnologie GmbH, 01796 Pirna (DE)
(72) Erfinder: Traulsen, Tim, 01796 Pirna (DE); Fehrmann, Gerd, 01796 Pirna (DE); Hucke, Thomas, 6600 Locarno (CH); Deckert, Andreas, 10825 Berlin (DE); Feller, Jörg, 01277 Dresden (DE); Schuffenhauer, Tom, 01159 Dresden (DE)
(74) Vertreter: Galander, Marcus

(56) Entgegenhaltungen:
- WO-A2-2010/063244
- HAMDI BEN YAHIA ET AL: "Comparison of the Crystal Structures and Magnetic Properties of the Low- and High-Temperature Forms of AgCuPO 4 : Crystal Structure Determination, Magnetic Susceptibility Measurements, and Spin Dimer Analysis", INORGANIC CHEMISTRY, Bd. 45, Nr. 14, 1. Juli 2006 (2006-07-01), Seiten 5501-5509, XP055043892, ISSN: 0020-1669, DOI: 10.1021/ic060484l
- MICHEL QUARTON ET AL: "Etude cristallochimique des orthophosphates doubles d'argent et d'un élément bivalent", REVUE DE CHIMIE MINERALE, GAUTHIER VILLARS, PARIS, FR, Bd. 21, Nr. 3, 1. Januar 1984 (1984-01-01) , Seiten 311-320, XP008157769, ISSN: 0035-1032
- MASASHI HASE ET AL: "Inelastic neutron scattering study of the spin-gap cuprate [beta]-AgCuPO4", PHYSICAL REVIEW B, Bd. 76, Nr. 13, 1. Oktober 2007 (2007-10-01), XP055043893, ISSN: 1098-0121, DOI: 10.1103/PhysRevB.76.134403

## Beschreibung

Die vorliegende Erfindung betrifft ein Material, insbesondere ein Aktivmaterial für eine Elektrode eines galvanischen Elements, ein Verfahren zur Herstellung dieses Materials, eine Mischung zur Herstellung einer Elektrode für ein galvanisches Element sowie ein galvanisches Element, insbesondere eine Batterie, und ein medizinisches Implantat umfassend eine solche Batterie. Ein weiterer Aspekt der vorliegenden Erfindung betrifft eine chemische Verbindung der Zusammensetzung MeₓCu_{n-x/2}P₂O₅₊ₙ (I) sowie die Herstellung und Verwendung derartiger chemischer Verbindungen.

Für die Stromversorgung eines medizinischen Implantats mit elektronischen Komponenten, z.B. eines Herzschrittmachers, mit einer drahtlosen, vorzugsweise bi-direktionalen Datenfernübertragung werden galvanische Elemente, z.B. Batterien, benötigt, die einerseits eine hohe Kapazität aufweisen und andererseits die Entnahme eines hohen Entladestroms (im mA-Bereich) ermöglichen. Eine hohe Kapazität verlängert die Einsatzzeit des medizinischen Implantats und verringert somit die Anzahl der für das Auswechseln der Batterie bzw. des Implantats nötigen chirurgischen Eingriffe. Eine zumindest kurzzeitige Entnahme eines hohen Entladestroms (Strompuls) ist für die Datenfernübertragung notwendig.

Humanmedizinische Implantate zur Herztherapie werden während des Implantationsvorgangs programmiert. Die Programmierung erfolgt herkömmlicherweise durch einen Programmierkopf, welcher unmittelbar über dem Implantat positioniert werden muss. Da dieser Programmierkopf für die Verwendung im OP nicht sterilisiert werden kann, muss er in eine sterile Ummantelung eingebettet werden. Um den Aufwand für die sterile Einbringung eines Programmierkopfes in den OP zu vermeiden, soll bei einer neuen Generation medizinischer Implantate zur Herztherapie die Programmierung des Implantats über Funksignale erfolgen. Für diese per Funk durchgeführte Programmierung ist eine besonders hohe Leistungsdichte der Batterie des Implantats zu Beginn der Entladung erforderlich. Um diese hohen Leistungsdichten erreichen zu können, muss die Spannung der zur Stromversorgung eingesetzten Batterie möglichst hoch sowie ihr Innenwiderstand möglichst gering sein.

Galvanische Elemente, z.B. Batterien, sind elektrochemische Energiespeicher und Energiewandler. Die grundlegenden Bestandteile eines galvanischen Elements sind eine erste Elektrode umfassend oder bestehend aus einem ersten Aktivmaterial, eine zweite Elektrode umfassend oder bestehend aus einem zweiten Aktivmaterial und ein die beiden Elektroden verbindender Elektrolyt. Bei der Entladung wird die gespeicherte chemische Energie durch eine elektrochemische Redoxreaktion umfassend die Oxidation eines ersten Aktivmaterials unter Freisetzung von Elektronen an einer ersten Elektrode (Anode, in Bezug auf den Entladevorgang negative Elektrode) und die Reduktion eines zweiten Aktivmaterials unter Aufnahme von Elektronen an einer zweiten Elektrode (Kathode, in Bezug auf den Entladevorgang positive Elektrode) in elektrische Energie umgewandelt, so dass dem galvanischen Element Strom entnommen werden kann.

Die Kapazität (entnehmbare Strommenge), die Spannung, der Innenwiderstand und andere Parameter galvanischer Elemente werden wesentlich von der Zusammensetzung der in den Elektroden eingesetzten Aktivmaterialien beeinflusst. Unter Aktivmaterialien werden dabei ausschließlich diejenigen Bestandteile der Elektroden des galvanischen Elements verstanden, die bei Entladung des galvanischen Elements oxidiert (an der Anode) bzw. reduziert (an der Kathode) werden und durch diese Elektrodenreaktionen elektrischen Strom liefern. Dabei kann das Aktivmaterial der Kathode eine oder mehrere reduzierbare Substanzen und/oder das Aktivmaterial der Anode eine oder mehrere oxidierbare Substanzen umfassen.

Neben den vorstehend definierten Aktivmaterialien enthalten die Elektroden galvanischer Elemente üblicherweise weitere Bestandteile, die nicht an den stromliefernden Elektrodenreaktionen teilnehmen, und daher nicht zur Kapazität des galvanischen Elements beitragen, jedoch für die zuverlässige Funktion des galvanischen Elements erforderlich sind, wie z.B. elektronisch leitfähige Additive zur Erhöhung der elektronischen Leitfähigkeit innerhalb der Elektrode, und/oder Bindemittel zur Erhöhung der Festigkeit der Elektrode.

Aus den Druckschriften DE 10 2006 021 158 A1, DE 10 2005 059 375 A1, EP 2 017 910 und US 4,260,668 ist eine Batterie mit einer positiven Elektrode bekannt, welche Kupferoxyphosphat als Aktivmaterial enthält. Die Druckschrift US 4,448,864 offenbart eine Lithium-Mangandioxid-Batterie, deren positive Elektrode neben Mangandioxid auch Kupferoxyphosphat enthält. Derartige Batterien sind u.a. für die Stromversorgung medizinischer Implantate geeignet. Aufgrund der vorstehend beschriebenen Entwicklungstendenzen insbesondere bei medizinischen Implantaten für die Herztherapie ist es jedoch erforderlich, die Spannung derartiger galvanischer Elemente, insbesondere im Anfangsstadium des Entladevorgangs, und die Belastbarkeit bei Entladung durch Strompulse zu erhöhen.

Diese Aufgabe wird gelöst durch ein Material, insbesondere ein Aktivmaterial für eine Elektrode eines galvanischen Elements, wobei das erfindungsgemäße Material eine oder mehrere Verbindungen der Zusammensetzung MeₓCu_{n-x/2}P₂O₅₊ₙ (I) umfasst oder aus diesen besteht, wobei für die Formel (I) gilt:
- Me ist ein einwertiges Metall, z.B. Silber
- 1 < x ≤ 6
- 1 < n ≤ 6
- n > x

In der oder den Verbindungen der Zusammensetzung (I) ist das einwertige Metall Me vorzugsweise Silber.

In der oder den Verbindungen der Zusammensetzung (I) ist x vorzugsweise gleich 2.

In der oder den Verbindungen der Zusammensetzung (I) ist n vorzugsweise gleich 3 oder 4.

Ein besonders bevorzugtes erfindungsgemäßes Material enthält eine Verbindung (I) mit der Zusammensetzung Ag₂Cu₂P₂O₈ (Ia) und/oder eine Verbindung (I) mit der Zusammensetzung Ag₂Cu₃P₂O₉ (Ib).

Neben einer oder mehreren Verbindungen der oben definierten Zusammensetzung (I) kann ein erfindungsgemäßes Aktivmaterial für eine Elektrode eines galvanischen Elements eine oder mehrere weitere chemische Verbindungen umfassen, die beim Entladevorgang elektrochemisch reduziert werden, wie z.B. Mangandioxid.

In seinen bevorzugten Ausführungsformen enthält das erfindungsgemäße Aktivmaterial neben einer oder mehreren Verbindungen der oben definierten Zusammensetzung (I)
- eine oder mehrere Verbindungen der Zusammensetzung CuₘP₂O₅₊ₘ (II) wobei für die Formel (II) gilt: 1 < m ≤ 6
- sowie optional eine oder mehrere weitere Substanzen, die beim Entladevorgang elektrochemisch reduziert werden, wie z.B. Mangandioxid.

In einer bevorzugten Ausführungsform besteht das erfindungsgemäße Material aus einer oder mehreren Verbindungen der Zusammensetzung MeₓCu_{n-x/2}P₂O₅₊ₙ (I) wie oben definiert und einer oder mehreren Verbindungen der Zusammensetzung CuₘP₂O₅₊ₘ (II) wie oben definiert.

Unter den Verbindungen der Zusammensetzung (II) sind aufgrund ihrer hohen theoretischen Kapazität und ihrer hohen Feststoffdichte solche Verbindungen mit einem hohen Kupfergehalt bevorzugt. Besonders bevorzugt ist die Verbindung der Zusammensetzung (II) mit m gleich 4, Cu₄P₂O₉ (IIa).

Bevorzugt umfasst das erfindungsgemäße Aktivmaterial mindestens eine kontinuierliche Phase und mindestens eine disperse Phase.

In diesen bevorzugten Ausführungsformen umfasst das erfindungsgemäße Material eine kontinuierliche Phase der Zusammensetzung CuₘP₂O₅₊ₘ (II) wie oben definiert und eine oder mehrere disperse Phasen der Zusammensetzung MeₓCu_{n-x/2}P₂O₅₊ₙ (I) oder besteht aus einer kontinuierlichen Phase der Zusammensetzung CuₘP₂O₅₊ₘ (II) wie oben definiert und einer oder mehreren dispersen Phasen der Zusammensetzung MeₓCu_{n-x/2}P₂O₅₊ₙ (I) wie oben definiert.

In einer besonders bevorzugten Ausführungsform umfasst das erfindungsgemäße Material eine kontinuierliche Phase der Zusammensetzung Cu₄P₂O₉ (IIa) sowie eine disperse Phase der Zusammensetzung Ag₂Cu₂P₂O₈ (Ia) und/oder eine disperse Phase der Zusammensetzung Ag₂Cu₃P₂O₉ (Ib) oder besteht aus einer kontinuierlichen Phase der Zusammensetzung Cu₄P₂O₉ (IIa) sowie einer dispersen Phase der Zusammensetzung Ag₂Cu₂P₂O₈ (Ia) und/oder einer dispersen Phase der Zusammensetzung Ag₂Cu₃P₂O₉ (Ib).

Die Zusammensetzung der jeweiligen Phasen kann röntgenographisch (XRD) identifiziert werden.

Vorzugsweise beträgt in dem erfindungsgemäßen Material der Anteil des Silbers in der dispersen Phase der Zusammensetzung (Ia) bzw. (Ib) 1 mol% bis 10 mol%, bevorzugt 5 mol%, bezogen auf den Gehalt an Kupfer in der kontinuierlichen Phase der Zusammensetzung (IIa).

Die vorstehend beschriebenen bevorzugten erfindungsgemäßen Materialien umfassend oder bestehend aus einer kontinuierlichen Phase der Zusammensetzung Cu₄P₂O₉ (IIa) sowie einer dispersen Phase der Zusammensetzung Ag₂Cu₂P₂O₈ (Ia) und/oder einer dispersen Phase der Zusammensetzung Ag₂Cu₃P₂O₉ (Ib) sind über eine Festkörpersynthese erhältlich, wobei als Edukte Kupferoxid CuO, eine Verbindung des ausgewählten einwertigen Metalls (vorzugsweise ein Oxid oder ein thermisch zersetzbares Salz, z.B. AgNO₃, Ag₂CO₃), und ein Phosphat-Ionen enthaltendes thermisch zersetzbares Salz, z.B. Diammoniumhydrogenphosphat (NH₄)₂HPO₄ in einer der gewünschten Zusammensetzung entsprechenden Stöchiometrie eingesetzt werden.

Die erfindungsgemäßen Materialien, insbesondere deren bevorzugte Ausführungsformen sind geeignet zur Verwendung als Aktivmaterial für eine Elektrode eines galvanischen Elements oder als Bestandteil einer erfindungsgemäßen Mischung zur Herstellung einer Elektrode für ein galvanisches Element.

Ein weiterer Aspekt der vorliegenden Erfindung betrifft eine chemische Verbindung der Zusammensetzung MeₓCu_{n-x/2}P₂O₅₊ₙ (I) wobei für die Formel (I) gilt: gilt:
- Me ist ein einwertiges Metall, z.B. Silber
- 1 < x ≤ 6.
- 1 < n ≤ 6
- n > x.

In der Verbindung der Zusammensetzung (I) ist das einwertige Metall Me vorzugsweise Silber.

In der Verbindung der Zusammensetzung (I) ist x vorzugsweise gleich 2.

In der Verbindung der Zusammensetzung (I) ist n vorzugsweise gleich 3 oder 4.

Eine besonders bevorzugte erfindungsgemäße Verbindung hat die Zusammensetzung Ag₂Cu₂P₂O₈ (Ia). Eine weitere besonders bevorzugte erfindungsgemäße Verbindung hat die Zusammensetzung Ag₂Cu₃P₂O₉ (Ib).

Die erfindungsgemäßen Verbindungen sind durch Festkörpersynthese erhältlich, wobei als Edukte Kupferoxid CuO, eine Verbindung des ausgewählten einwertigen Metalls (vorzugsweise ein Oxid oder ein thermisch zersetzbares Salz, z.B. AgNO₃, Ag₂CO₃), und ein Phosphat-Ionen enthaltendes thermisch zersetzbares Salz, z.B. Diammoniumhydrogenphosphat (NH₄)₂HPO₄ in einer der gewünschten Zusammensetzung entsprechenden Stöchiometrie eingesetzt werden.

Die erfindungsgemäßen Verbindungen der Zusammensetzung MeₓCu_{n-x/2}P₂O₅₊ₙ (I), insbesondere deren bevorzugte Ausführungsformen Ag₂Cu₂P₂O₈ (Ia) und Ag₂Cu₃P₂O₉ (Ib), sind geeignet für die Verwendung als Aktivmaterial für eine Elektrode eines galvanischen Elements sowie als Bestandteil eines erfindungsgemäßen Aktivmaterials für eine Elektrode eines galvanischen Elements oder als Bestandteil einer erfindungsgemäßen Mischung zur Herstellung einer Elektrode eines galvanischen Elements.

Die oben beschriebenen bevorzugten erfindungsgemäßen Verbindungen und die oben beschriebenen bevorzugten erfindungsgemäßen Materialien sind bevorzugt erhältlich durch das Verfahren der Festkörpersynthese. Ein Verfahren zur Herstellung einer erfindungsgemäßen Verbindung bzw. eines erfindungsgemäßen Aktivmaterials umfasst die Schritte:
- Bereitstellen einer Mischung umfassend die Edukte
   - Kupferoxid CuO
   - ein Phosphat-Ionen enthaltendes thermisch zersetzbares Salz, z.B. Diammoniumhydrogenphosphat (NH₄)₂HPO₄
   - eine Silberverbindung (vorzugsweise ein Oxid oder ein thermisch zersetzbares Salz, z.B. AgNO₃, Ag₂CO₃)
   in einer der gewünschten Zusammensetzung entsprechenden Stöchiometrie
- Homogenisieren der Mischung,
- ein- oder mehrstufiges thermisches Behandeln der Mischung, wobei die Anzahl, die jeweilige Dauer und die jeweilige Temperatur der Stufen der thermischen Behandlung so gewählt sind, dass die gewünschte erfindungsgemäße Verbindung der Zusammensetzung Ag₂Cu₂P₂O₈ (Ia) und Ag₂Cu₃P₂O₉ (Ib) bzw. das gewünschte erfindungsgemäße Material aus einer kontinuierlichen Phase der Zusammensetzung Cu₄P₂O₉ (IIa) und einer dispersen Phase der Zusammensetzung Ag₂Cu₂P₂O₈ (Ia) oder Ag₂Cu₃P₂O₉ (Ib) gebildet wird,
- ggf. Homogenisieren der thermisch behandelten Mischung.

Prinzipiell werden die Edukte möglichst homogen vermischt und anschließend bei ausreichend hohen Temperaturen und über einen ausreichend langen Zeitraum thermisch behandelt. Während dieses Prozesses werden eine oder mehrere Verbindungen der Zusammensetzung MeₓCu_{n-x/2}P₂O₅₊ₙ (I) wie oben definiert, insbesondere Ag₂Cu₂P₂O₈ (Ia) und/oder Ag₂Cu₃P₂O₉ (Ib) erzeugt, wobei je nach Zusammensetzung der Mischung umfassend die Edukte sowie Temperatur und Dauer der thermischen Behandlung Verbindungen der Zusammensetzung MeₓCu_{n-x/2}P₂O₅₊ₙ (I) entweder jeweils als reine Phase oder als disperse Phase in einer kontinuierlichen Phase der Zusammensetzung CuₘP₄O₅₊ₘ (II), insbesondere Cu₄P₂O₉ (IIa) erhalten werden. Falls erforderlich, wird die erhaltene Reaktionsmischung nach der thermischen Behandlung homogenisiert.

Bevorzugt erfolgt die thermische Behandlung der homogenisierten Mischung umfassend die Edukte in einem Porzellan-, Korund- oder Quarzglastiegel. Typischerweise umfasst die thermische Behandlung mehrere, speziell drei, Stufen, wobei die Temperatur der thermischen Behandlung von der ersten zur letzten, speziell von der ersten zur dritten Stufe ansteigt, während einer Behandlungsstufe aber jeweils konstant gehalten wird.

Bevorzugt umfasst die erste Stufe der thermischen Behandlung ein Tempern der homogenisierten Mischung umfassend die Edukte bei einer Temperatur im Bereich von 120 bis 200°C, bevorzugt 160°C, über einen Zeitraum von 20 bis 60 Stunden, bevorzugt 48 Stunden. Bevorzugt umfasst die zweite Stufe der thermischen Behandlung ein Tempern der homogenisierten Mischung umfassend die Edukte bei einer Temperatur im Bereich von 250 bis 350°C, bevorzugt 290°C, über einen Zeitraum von 20 bis 60 Stunden, bevorzugt 48 Stunden. Temperatur und Dauer der dritten Stufe der thermischen Behandlung richten sich nach der Zusammensetzung der gewünschten erfindungsgemäßen Verbindung MeₓCu_{n-x/2}P₂O₅₊ₙ (I) bzw. nach der gewünschten Zusammensetzung und Menge der dispersen Phase der Zusammensetzung MeₓCu_{n-x/2}P₂O₅₊ₙ (I) in einem erfindungsgemäßen Material.

Um ein erfindungsgemäßes Material zu erhalten, welches eine disperse Phase der Zusammensetzung MeₓCu_{n-x/2}P₂O₅₊ₙ (I) und eine kontinuierlichen Phase der Zusammensetzung CuₘP₂O₅₊ₘ (II) umfasst oder daraus besteht, erfolgt die letzte Stufe der thermischen Behandlung bei einer Temperatur im Bereich von 600 bis 800°C über einen Zeitraum von 10 bis 20 Tagen, wobei die Mischung an jeden bis jeden fünften Tag (vorzugsweise an jeden dritten Tag) homogenisiert wird.

Beispielsweise umfasst die Herstellung eines erfindungsgemäßen Aktivmaterials mit einem Silberanteil von 1 mol-% eine dreistufige thermische Behandlung mit
- einer ersten Stufe bei 160°C für 48 Stunden
- einer zweiten Stufe bei 290°C für 48 Stunden
- einer dritten Stufe bei 750°C für 16 Tage.

Beispielsweise umfasst die Herstellung eines erfindungsgemäßen Aktivmaterials mit einem Silberanteil von 5 mol-% eine dreistufige thermische Behandlung mit
- einer ersten Stufe bei 160°C für 48 Stunden
- einer zweiten Stufe bei 290°C für 48 Stunden
- einer dritten Stufe bei 750°C für 13 Tage.

Beispielsweise umfasst die Herstellung eines erfindungsgemäßen Aktivmaterials mit einem Silberanteil von 10 mol-% eine dreistufige thermische Behandlung mit
- einer ersten Stufe bei 160°C für 48 Stunden
- einer zweiten Stufe bei 290°C für 48 Stunden
- einer dritten Stufe bei 700°C für 14 Tage.

Die Zusammensetzung der gebildeten Phasen kann röntgenographisch (XRD) identifiziert werden.

Um eine erfindungsgemäße Verbindung der Zusammensetzung MeₓCu_{n-x/2}P₂O₅₊ₙ (I), als reine Phase zu erhalten, erfolgt die letzte Stufe der thermischen Behandlung bei einer Temperatur im Bereich von 600 bis 670°C über einen Zeitraum von 5 bis 15 Tagen, vorzugsweise 12 Tagen, wobei die Mischung an jeden bis jeden fünften Tag (vorzugsweise an jeden dritten Tag) homogenisiert wird.

Beispielsweise umfasst die Herstellung der erfindungsgemäßen Verbindung Ag₂Cu₂P₂O₈ (Ia) eine dreistufige thermische Behandlung mit
- einer ersten Stufe bei 160°C für 48 Stunden
- einer zweiten Stufe bei 290°C für 48 Stunden
- einer dritten Stufe bei 600°C für 5 bis 15 Tage (vorzugsweise 12 Tage).

Beispielsweise umfasst die Herstellung der erfindungsgemäßen Verbindung Ag₂Cu₃P₂O₉ (Ib) eine dreistufige thermische Behandlung umfassend
- eine erste Stufe bei 160°C für 48 Stunden
- eine zweite Stufe bei 290°C für 48 Stunden
- eine dritte Stufe bei 670°C für 5 bis 15 Tage (vorzugsweise 12 Tage).

Bevorzugt wird die Mischung nach jeder Stufe der thermischen Behandlung homogenisiert und, falls erforderlich, zerkleinert. Nach Abschluss der thermischen Behandlung wird die Mischung nochmals homogenisiert und gegebenenfalls zerkleinert.

Das erfindungsgemäße Material, insbesondere in seinen bevorzugten Ausführungsformen, ist geeignet zur Verwendung als Aktivmaterial für eine Elektrode eines galvanischen Elements, insbesondere für eine (bezogen auf den Entladevorgang) positive Elektrode (Kathode) eines galvanischen Elements. Während des Entladevorgangs werden zunächst Ionen des einwertigen Metalls Me, z.B. Silber zum elementaren Metall reduziert und im weiteren Verlauf der Entladung Kupfer-Ionen zu metallischem Kupfer. Im Kristallgitter des Aktivmaterials der positiven Elektrode werden während der Entladung Lithium-Ionen eingelagert.

Durch das erfindungsgemäße Verfahren zur Herstellung eines Aktivmaterials für eine Elektrode eines galvanisches Elements auf Basis einer Festkörpersynthese mit einer Reaktionsmischung, in der die Edukte homogen verteilt sind, ist ein Material erhältlich, das einen hohen Grad von Dispersität aufweist. Bei der Herstellung von Elektroden umfassend das erfindungsgemäße Aktivmaterial ist es daher nicht erforderlich, technische Vorkehrungen zu treffen, um bei der Verarbeitung eine Entmischung der Komponenten des Aktivmaterials, die z.B. durch deren unterschiedliche Dichte hervorgerufen werden könnte, zu vermeiden. Aufgrund der homogenen Verteilung der Komponenten innerhalb des erfindungsgemäßen Aktivmaterials verläuft die Entladung der Elektrode homogen.

Es wird angenommen, dass in den bevorzugten erfindungsgemäßen Aktivmaterialien wegen der molekulardispersen Verteilung der Verbindung der Zusammensetzung MeₓCu_{n-x/2}P₂O₅₊ₙ (I), insbesondere Ag₂Cu₂P₂O₈ (Ia) und/oder Ag₂Cu₃P₂O₉ (Ib), in der eine kontinuierlichen Phase bildenden Verbindung der Zusammensetzung CuₘP₂O₅₊ₘ (II), insbesondere Cu₄P₂O₉ (IIa), Defektstrukturen entstehen, welche im Vergleich zur Struktur des aus dem Stand der Technik bekannten Aktivmaterials CuₘP₂O₅₊ₘ (II) die Beweglichkeit von Ionen in der Gitterstruktur des erfindungsgemäßen Aktivmaterials erleichtern. Die vorliegende Erfindung ist jedoch nicht an diese Theorie gebunden.

Ein weiterer Aspekt der vorliegenden Erfindung betrifft eine Mischung zur Herstellung einer Elektrode für ein galvanisches Element. Die erfindungsgemäße Mischung zur Herstellung einer Elektrode für ein galvanisches Element umfasst:
(i) ein erfindungsgemäßes Aktivmaterial wie oben beschrieben
   oder
   eine oder mehrere erfindungsgemäße Verbindungen der Zusammensetzung MeₓCu_{n-x/2}P₂O₅₊ₙ (I) wie oben beschrieben, vorzugsweise eine oder beide Verbindungen der Gruppe bestehend aus Ag₂Cu₂P₂O₈ (Ia) und Ag₂Cu₃P₂O₉ (Ib),
   sowie
(ii) ein oder mehrere leitfähige Additive
   und/oder
(iii) ein oder mehrere Bindemittel
   sowie
(iv) optional ein oder mehrere Dispergiermittel
   oder besteht aus den Komponenten (i), (ii) und/oder (iii) und optional (iv).

Die erfindungsgemäße Mischung kann beispielsweise als Feststoffmischung (ohne Dispergiermittel (iv) oder als Dispersion in einem typischerweise flüssigen Dispergiermittel (iv) vorliegen.

Als leitfähige Additive (ii) werden elektronisch leitfähige Materialien eingesetzt, die nicht an der stromliefernden Elektrodenreaktion teilnehmen. Die Funktion des leitfähigen Additivs oder der leitfähigen Additive (ii) besteht darin, die elektronische Leitfähigkeit innerhalb der Elektrode zu erhöhen und den elektronischen Kontakt zum Ableiter (typischerweise ein in die Elektrode eingearbeitetes metallisches Gitter oder eine metallische Folie) bzw. zum Anschluss der Elektrode zu verbessern. Dies wird erreicht durch eine gleichmäßige, feindisperse Verteilung eines teilchenförmigen Leitfähigkeitsadditivs im Aktivmaterial, so dass die Partikel des leitfähigen Additivs (ii) elektronisch leitende Kontakte zwischen den Partikeln des erfindungsgemäßen Aktivmaterials bzw. der erfindungsgemäßen Verbindung bzw. zwischen Partikeln des erfindungsgemäßen Aktivmaterials bzw. der erfindungsgemäßen Verbindung und dem Ableiter oder Anschluss ausbilden. Dadurch wird der Ohmsche Widerstand der Elektrode und somit der Innenwiderstand des galvanischen Elements insgesamt vermindert.

In der erfindungsgemäßen Mischung ist das leitfähige Additiv oder sind die leitfähigen Additive vorzugsweise ausgewählt aus der Gruppe bestehend aus Graphit, Ruß, Graphitexpandat, Carbonfasern und Metallpulvern.

Um eine homogene, feindisperse Verteilung des leitfähigen Additivs bzw. der leitfähigen Additive (ii) im erfindungsgemäßen Aktivmaterial bzw. der erfindungsgemäßen Verbindung und eine zuverlässige elektronische Kontaktierung innerhalb der Elektrode zu erreichen, werden bevorzugt Kombinationen leitfähiger Additive mit unterschiedlicher Partikelgröße und -form eingesetzt, z.B. Graphitexpandat in Kombination mit kugel- oder plättchenformigem Graphit oder Carbonfasern in Kombination mit kugel- oder plättchenförmigern Graphit.

Die Menge des oder der leitfähigen Additive (ii) ist so zu wählen, dass einerseits eine effektive Verringerung des Innenwiderstands erreicht wird, anderseits jedoch der Anteil des erfindungsgemäßen Aktivmaterials bzw. der erfindungsgemäßen Verbindung nicht soweit verringert wird, dass die Kapazität des galvanischen Elements inakzeptabel vermindert wird. Vorzugsweise liegt der Gehalt des leitfähigen Additivs oder der leitfähigen Additive (ii) an der Gesamtmasse der erfindungsgemäßen Mischung im Bereich von 0,1 bis 20 Gew.%, bevorzugt von 3 bis 10 Gew.%.

Die Funktion des Bindemittels oder der Bindemittel (iii) besteht darin, den Zusammenhalt der Bestandteile der Elektrode und somit die mechanische Festigkeit der Elektrode zu erhöhen. Geeignete Bindemittel sind beispielsweise Polymere. In der erfindungsgemäßen Mischung ist das Bindemittel oder sind die Bindemittel vorzugsweise ausgewählt aus der Gruppe bestehend aus Polytetrafluoroethylen (PTFE), Polyvinylidendifluorid (PVDF), Polyolefinen, Polyethylenoxid (PEO), Polyethylen (PE), Polypropylen (PP), Polyacrylaten und Ethylen-Propylen-Dien Monomer (EPDM).

Die Menge des oder der Bindemittel (iii) ist so zu wählen, dass einerseits die nötige mechanische Festigkeit erreicht wird, anderseits jedoch der Anteil des erfindungsgemäßen Aktivmaterials bzw. der erfindungsgemäßen Verbindung nicht soweit verringert wird, dass die Kapazität des galvanischen Elements inakzeptabel vermindert wird. Vorzugsweise liegt der Gehalt des Bindemittels oder der Bindemittel (iii) an der Gesamtmasse der erfindungsgemäßen Mischung im Bereich von 0 bis 12 Gew.%, bevorzugt von 1 bis 8 Gew.%.

Die Mischung zur Herstellung einer Elektrode für ein galvanisches Element ist eine Trockenmischung oder eine Dispersion. Zur Herstellung einer erfindungsgemäßen Mischung werden die die o.g. Bestandteile (i), (ii) und/oder (iii) sowie gegebenenfalls (iv) und weitere Additive (z.B. Magnesiumoxid, Lithiumcarbonat) entsprechend ihren jeweiligen Anteilen an der Gesamtmasse der Mischung bereitgestellt und homogen miteinander gemischt.

Die erfindungsgemäße Mischung, insbesondere in ihren bevorzugten Ausführungsformen, ist zur Herstellung einer Elektrode für ein erfindungsgemäßes galvanisches Element geeignet.

Die Herstellung einer Elektrode für ein erfindungsgemäßes galvanisches Element umfasst die Schritte
a) Bereitstellen einer erfindungsgemäßen Mischung (wie oben beschrieben) zur Herstellung einer Elektrode für ein galvanisches Element
b) Verfestigen der in Schritt a) bereitgestellten Mischung.

In Schritt b) kann das Verfestigen der in Schritt a) bereitgestellten erfindungsgemäßen Mischung beispielsweise mittels uniaxialem, biaxialem oder isostatischem Pressen erfolgen. Besonders bevorzugt erfolgt das Verfestigen der in Schritt a) bereitgestellten Mischung bzw. des in Schritt a) bereitgestellten Aktivmaterials mittels eines Stempel-Matrize-Verfahrens. Gegebenenfalls kann sich an Schritt b) ein Trocknungsschritt anschließen, z.B. eine Vakuumtrocknung. Bevorzugt wird die Vakuumtrocknung über mindestens 8 Stunden bei 80 bis 340°C, bevorzugt bei Temperaturen zwischen 120°C und 180°C durchgeführt. Sofern das im Schritt b) erhaltene verfestigte Produkt noch nicht die gewünschte Form für den Einsatz als Elektrode aufweist, kann das verfestigte und ggf. getrocknete Produkt durch weitere Bearbeitungsschritte, z.B. Zuschneiden, in die gewünschte Form gebracht werden. Hinsichtlich weiterer Details der Herstellung der Elektroden wird auf die Druckschriften DE 10 2006 021 158 A1, DE 10 2005 059 375 A1 und EP 2 017 910 verweisen.

Als alternatives Verfahren zur Herstellung der Elektroden sind Beschichtungsverfahren mit Dispersionen geeignet. Hierfür wird eine erfindungsgemäße Mischung hergestellt, indem (i) ein erfindungsgemäßes Aktivmaterial bzw. eine oder mehrere erfindungsgemäße Verbindungen mit einem oder mehreren leitfähigen Additiven (ii) und/oder einem oder mehreren Bindemitteln (iii) in einem Dispergiermittel (iv) dispergiert werden. Die in Form einer Dispersion vorliegende erfindungsgemäße Mischung wird mittels eines Nassbeschichtungsverfahrens z.B. durch Walzenauftrag, Rakeln, Druck- oder Gießverfahren als Nassfilm auf einen elektronisch leitfähigen Träger, in der Regel eine Metallfolie, aufgebracht und auf diese Weise verfestigt. Der Nassfilm wird anschließend getrocknet und optional verdichtet, z.B. durch Kalandrieren.

Ein weiterer Aspekt der vorliegenden Erfindung betrifft ein galvanisches Element, vorzugsweise eine Batterie, insbesondere zur Stromversorgung eines medizinischen Implantats mit elektronischen Komponenten. Das erfindungsgemäße galvanische Element umfasst eine Elektrode, insbesondere eine (bezogen auf den Entladevorgang) positive Elektrode (Kathode) bestehend aus oder umfassend
- eine erfindungsgemäße Mischung (wie oben beschrieben) oder
- ein erfindungsgemäßes Aktivmaterial (wie oben beschrieben)
   oder
- eine oder mehrere erfindungsgemäße Verbindungen der Zusammensetzung MeₓCu_{n-x/2}P₂O₅₊ₙ (I) wie oben beschrieben, vorzugsweise eine oder beide Verbindungen der Gruppe bestehend aus Ag₂Cu₂P₂O₈ (Ia) und Ag₂Cu₃P₂O₉ (Ib),

Vorzugsweise enthält das Aktivmaterial der zweiten, (bezogen auf den Entladevorgang) negativen Elektrode (Anode) metallisches Lithium oder besteht daraus. Alternativ können Legierungen des Lithiums verwendet werden.

Im Fall von Lithium als Aktivmaterial für die Anode des erfindungsgemäßen galvanischen Elements wird als Elektrolyt typischerweise eine wasserfreie Lösung einer LithiumVerbindung, z.B. eines Lithiumsalzes, in einem nicht-wässrigen organischen Lösungsmittel oder in einem Gemisch nichtwässriger organischer Lösungsmittel verwendet. Als Lithium-Salze werden bevorzugt Salze mit chemisch wenig oder nicht reaktiven Anionen eingesetzt. Beispiele hierfür sind Lithiumhexaflourophosphat, Lithiumhexafluoroarsenat, Lithiumtrifluormethansulfonat, Lithiumtetrachloraluminat, Lithiumtetrafluoroborat oder Lithiumperchlorat eingesetzt.

Als Lösemittel werden bevorzugt Verbindungen eingesetzt, die eine hohe Löslichkeit für das im Elektrolyt zu verwendende Lithium-Salz aufweisen, chemisch nicht oder nur wenig mit den Elektrodenmaterialien reagieren und das Elektrodenmaterial nicht in Lösung bringen. Beispiele für typische Lösemittel in Elektrolyten von Lithium-Batterien sind Propylencarbonat, Ethylencarbonat, Dimethylcarbonat, Diethylcarbonat, Ethylmethylcarbonat, 2-Methyltetrahydrofuran, Dioxolan, γ-Butyrolacton, Acetonitril, Digylme, 1,2 Dimethoxyethan, Dimethylformamid. Bevorzugte Lösungsmittel sind z.B. Dimethoxyethan, Ethylencarbonat und Propylencarbonat. Ein besonders bevorzugter Elektrolyt ist eine 1-molare Lösung von Lithiumperchlorat in einer Mischung von 1,2-Dimethoxyethan, Ethylencarbonat und Propylencarbonat (4:4:2).

Das erfindungsgemäße galvanische Element, insbesondere in seinen bevorzugten Ausführungsformen, kann beispielsweise zur Stromversorgung eines medizinischen Implantats, das elektronische Komponenten enthält, verwendet werden. Das medizinische Implantat ist beispielsweise ausgewählt aus der Gruppe bestehend aus Herzschrittmachern, Defibrillatoren, Sensoren zur Messung, Aufzeichnung und Übertragung physiologischer Daten, Neurostimulatoren, orthopädischen Implantaten, Dosierpumpen und Implantaten mit Dosieroder Ventilfunktion.

Vorzugsweise bildet das erfindungsgemäße galvanische Element eine Batterie, die ihrerseits vorzugsweise Bestandteil eines medizinischen Implantats, z.B. eines Herzschrittmachers oder eines Herzstimulators, ist.

Ein weiterer Aspekt der vorliegenden Erfindung betrifft daher ein medizinisches Implantat, insbesondere ein medizinisches Implantat zur Herztherapie, z.B. einen Herzschrittmacher oder einen Herzstimulator, umfassend ein erfindungsgemäßes galvanisches Element, vorzugsweise eine erfindungsgemäße Batterie.

Der Einsatz eines erfindungsgemäßen Materials wie oben beschrieben oder einer erfmdungsgemäßen Verbindung wie oben beschrieben als Aktivmaterial oder als Bestandteil eines Aktivmaterials für eine Elektrode, speziell die (bezogen auf den Entladevorgang) positive Elektrode (Kathode) eines galvanischen Elements ermöglicht verschiedene Verbesserungen gegenüber aus dem Stand der Technik bekannten galvanischen Elementen mit Kupferoxyphosphat als Aktivmaterial.

Während des Entladevorgangs werden zunächst die Ionen des einwertigen Metalls Me zum elementaren Metall, z.B. Silber reduziert, und im weiteren Verlauf der Entladung die Kupfer-Ionen zu metallischem Kupfer. Die Entladung von Silber-Ionen erfolgt bei einer höheren Spannung als die Entladung der Kupfer-Ionen. Durch Variation des Anteils der Verbindung oder der Verbindungen mit der Zusammensetzung MeₓCu_{n-x/2}P₂O₅₊ₙ (I), insbesondere Ag₂Cu₂P₂O₈ (Ia) und/oder Ag₂Cu₃P₂O₉ (Ib) in den vorstehend beschriebenen bevorzugten erfindungsgemäßen Aktivmaterialien lässt sich einstellen, wie groß die Strommenge (Kapazität) ist, die einem galvanischen Element bei der gegenüber der Entladung der Kupfer-Ionen höheren Spannung entnommen werden kann. Besonders bevorzugte Ausführungsformen des erfindungsgemäßen galvanischen Elements weisen bei Beginn der Entladung über einen Widerstand von 100 kOhm eine Spannung von ca. 3,4 V auf

Das im Anfangsstadium des Entladevorgangs durch Reduktion der Ionen des einwertigen Metalls gebildete elementare Metall, z.B. Silber, verbessert die elektronische Kontaktierung innerhalb der Elektrode, so dass deren Ohmscher Widerstand und somit der Innenwiderstand des galvanischen Elements insgesamt vermindert wird. Das bei der Entladung gebildete elementare Metall wirkt somit ähnlich wie die oben beschriebenen leitfähigen Additive (ii), hat jedoch den Vorteil, das es durch eine Reaktion gebildet wird, die selbst zur Kapazität des galvanischen Elements beiträgt. Darüber hinaus ist der spezifische elektrische Widerstand des bei der Entladung gebildeten elementaren Metalls niedriger als der spezifische elektrische Widerstand der üblicherweise eingesetzten kohlenstoffhaltigen Additive.

Dank der hohen Spannung und dem schnellen Abfallen des Innenwiderstands zu Beginn des Entladevorgangs eines erfindungsgemäßen galvanischen Elements lässt sich die insbesondere beim Einsatz für die Stromversorgung medizinischer Implantate gewünschte hohe Leistungsdichte zu Beginn des Entladevorgangs realisieren.

Es wird angenommen, dass in den bevorzugten erfindungsgemäßen Aktivmaterialien wegen der molekulardispersen Verteilung der Verbindung der Zusammensetzung MeₓCu_{n-x/2}P₂O₅₊ₙ (I), speziell Ag₂Cu₂P₂O₈ (Ia) und/oder Ag₂Cu₃P₂O₉ (Ib) in der eine kontinuierlichen Phase bildenden Verbindung der Zusammensetzung CuₘP₂O₅₊ₘ (II), speziell Cu₄P₂O₉ (IIa) Defektstrukturen entstehen, welche im Vergleich zur Struktur des aus dem Stand der Technik bekannten Aktivmaterials CuₘP₂O₅₊ₘ (II) die Beweglichkeit von Ionen in der Gitterstruktur des erfindungsgemäßen Aktivmaterials erleichtern. Dadurch wird erreicht, dass auch nach vollständiger Entladung des Silbers die Spannung bei der Entladung der Kupfer-Ionen höher ist als bei einem galvanischen Element, dessen Kathode als Aktivmaterial CuₘP₂O₅₊ₘ (II) ohne eine disperse Verbindung der Zusammensetzung MeₓCu_{n-x/2}P₂O₅₊ₙ (I), speziell Ag₂Cu₂P₂O₈ (Ia) und/oder Ag₂Cu₃P₂O₉ (Ib) enthält. Die vorliegende Erfindung ist jedoch nicht an diese Theorie gebunden.

Die sowohl im Anfangsstadium des Entladevorgangs (Entladung der Ionen des einwertigen Metalls) als auch im Stadium der Entladung der Kupfer-Ionen relativ hohe Spannung und der verminderte Innenwiderstand des erfindungsgemäßen galvanischen Elements ermöglichen eine hohe Belastbarkeit bei Pulsentladung. Die Spannung eines erfindungsgemäßen galvanischen Elements bleibt während einer Belastung durch Strompulse, die für die Datentelemetrie zu externen Sendern und Empfängern typisch sind, stets hoch genug, so dass eine volle Funktionstüchtigkeit der elektronischen Komponenten des Implantats gewährleistet ist. Dies ist insbesondere dann von großer Bedeutung, wenn das Implantat während des Implantationsvorgangs, also zu Beginn der Entladung des galvanischen Elements, drahtlos über RF-Telemetrie Daten senden und empfangen soll. Darum stellt die hohe Anfangsbelastbarkeit des erfindungsgemäßen galvanischen Elements durch Stromimpulse bei gleichzeitig höher Spannung einen weiteren für den Einsatz zur Stromversorgung medizinischer Implantate bedeutenden technischen Vorteil dar.

### Ausführungsbeispiele

Weitere Merkmale, Vorteile und Anwendungsmöglichkeiten der vorliegenden Erfindung ergeben sich aus den nachfolgenden beschriebenen Ausführungs- und Vergleichsbeispielen in Verbindung mit den Figuren.

Die Figuren zeigen:

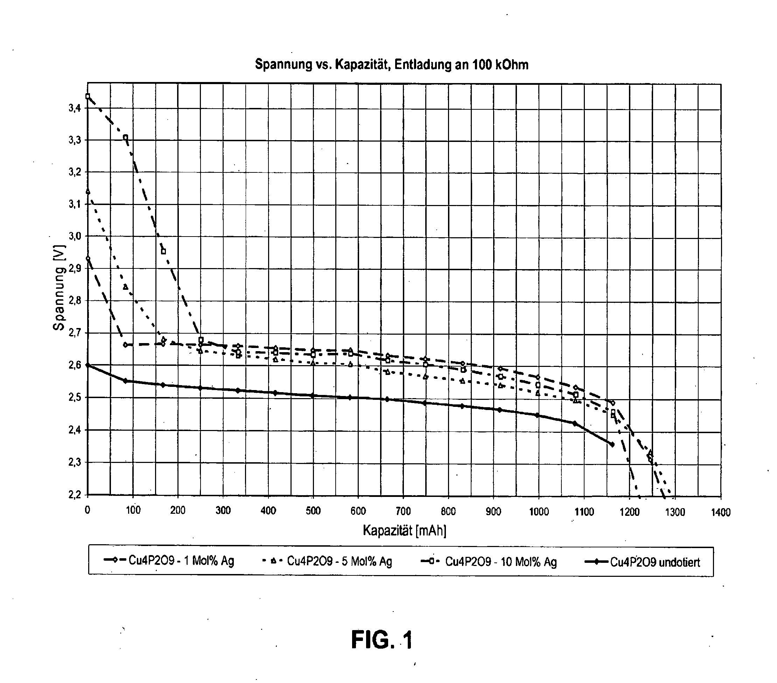

- Fig. 1: Zellspannung verschiedener erfindungsgemäßer Batterien (mit einer Kathode entsprechend dem Ausführungsbeispiel 1, 2 bzw. 3) und einer nicht erfindungsgemäßen Batterie (mit einer Kathode entsprechend dem Vergleichsbeispiel) in Abhängigkeit von der entnommenen Strommenge (Kapazität) bei Entlädung über eine Last von 100 kOhm.

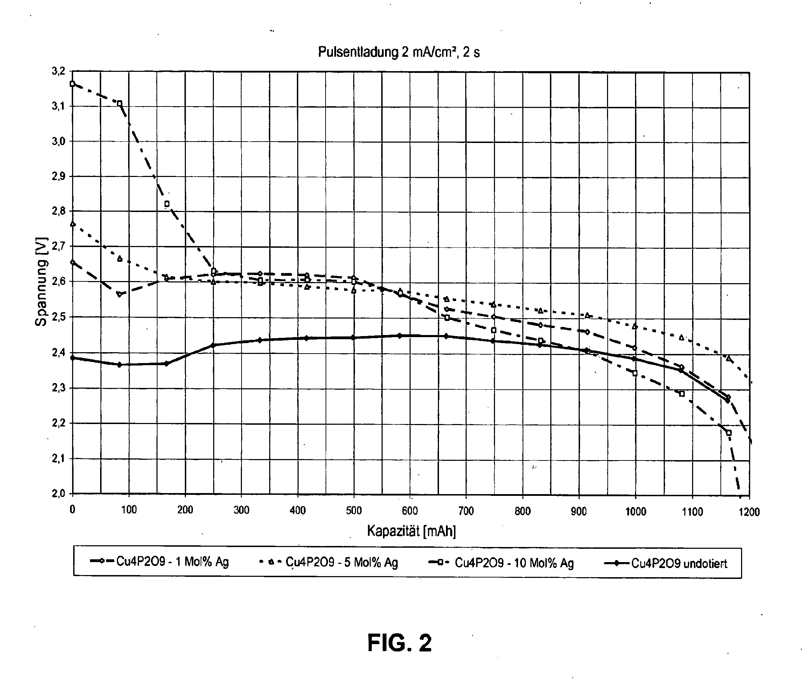

- Fig. 2: Zellspannung verschiedener erfindungsgemäßer Batterien (mit einer Kathode entsprechend dem Ausführungsbeispiel 1, 2 bzw. 3) und einer nicht erfindungsgemäßen Batterie (mit einer Kathode entsprechend dem Vergleichsbeispiel) in Abhängigkeit von der entnommenen Strommenge (Kapazität) bei Pulsentladung (Pulsstrom 2 mA/cm², Pulsdauer 2 s).

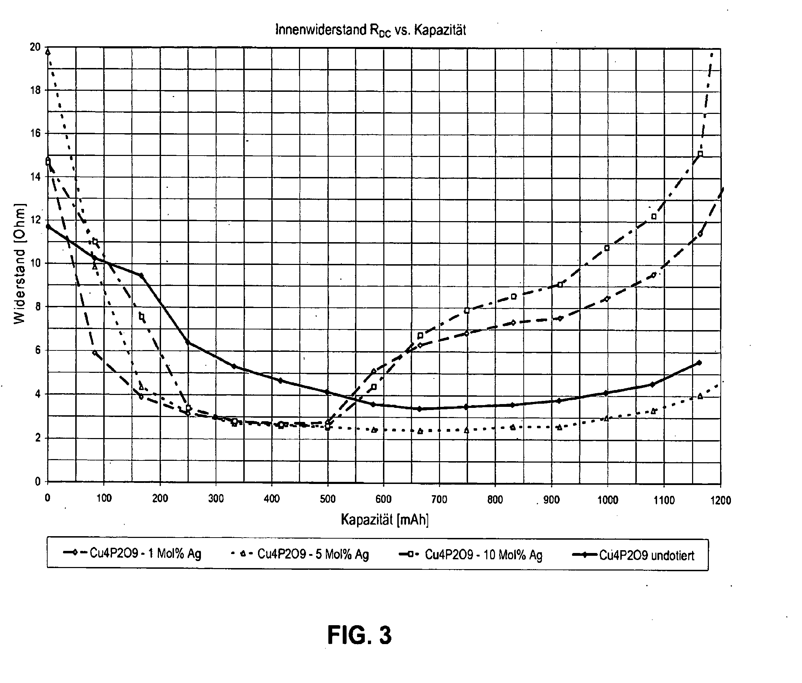

- Fig. 3: Innenwiderstand verschiedener erfindungsgemäßer Batterien (mit einer Kathode entsprechend dem Ausführungsbeispiel 1, 2 bzw. 3) und einer nicht erfindungsgemäßen Batterie (mit einer Kathode entsprechend dem Vergleichsbeispiel) in Abhängigkeit von der entnommenen Strommenge (Kapazität).

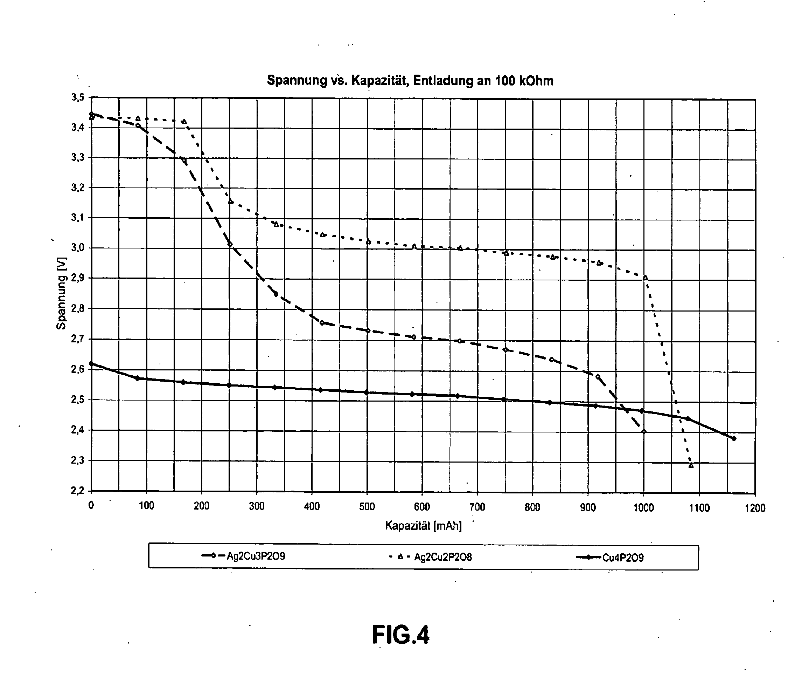

- Fig. 4: Zellspannung zweier erfindungsgemäßer Batterien (mit einer Kathode entsprechend dem Ausführungsbeispiel 4 bzw. 5) und einer nicht erfindungsgemäßen Batterie (mit einer Kathode entsprechend dem Vergleichsbeispiel) in Abhängigkeit von der entnommenen Strommenge (Kapazität) bei Entladung über eine Last von 100 kOhm.

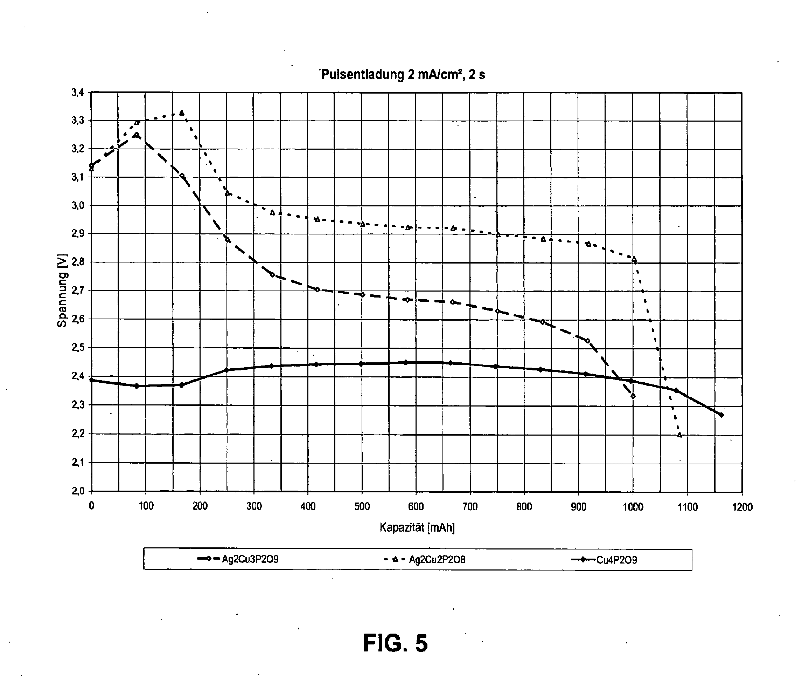

- Fig. 5: Zellspannung zweier erfindungsgemäßer Batterien (Kathode entsprechend dem Ausführungsbeispiel 4 bzw. 5) und einer nicht erfindungsgemäßen Batterie (mit einer Kathode entsprechend dem Vergleichsbeispiel) in Abhängigkeit von der entnommenen Strommenge (Kapazität) bei Pulsentladung (Pulsstrom 2 mA/cm², Pulsdauer 2s).

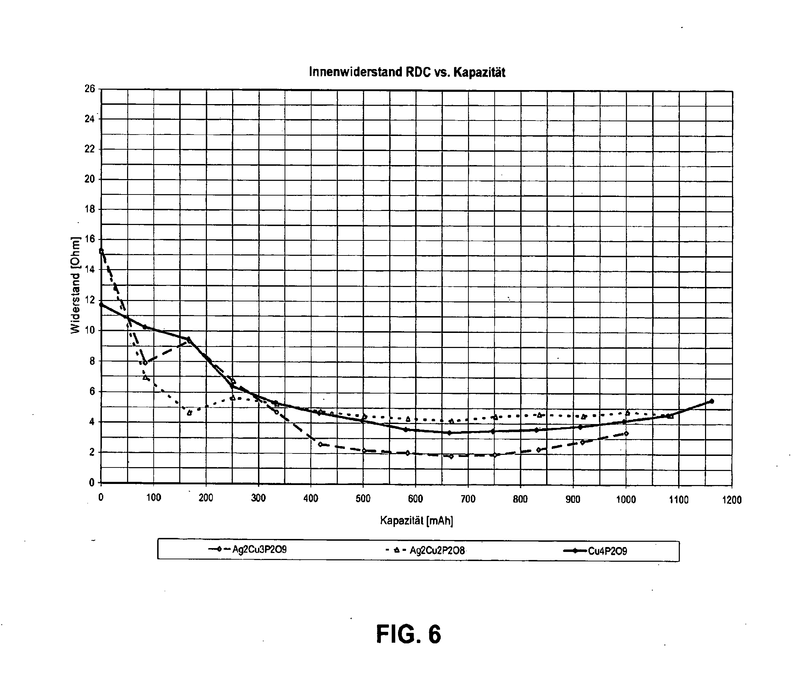

- Fig. 6: Innenwiderstand zweier erfindungsgemäßer Batterien (mit einer Kathode entsprechend dem Ausführungsbeispiel 4 bzw. 5) und einer nicht erfindungsgemäßen Batterie (mit einer Kathode entsprechend dem Vergleichsbeispiel) in Abhängigkeit von der entnommenen Strommenge (Kapazität).

Für die Ausführungs- und Vergleichsbeispiele wurden galvanische Elemente in Form von Batterien mit folgendem Aufbau hergestellt:

| | Ausführungsbeispiel 1 | Ausfuhrungsbeispiel 2 | Ausführungsbeispiel 3 | Ausführungsbeispiel 4 | Ausführungsbeispiel 5 | Vergleichsbeispiel |
|---|---|---|---|---|---|---|
| Aktivmaterial der Kathode | kontinuierlich: Cu₄P₂O₉ dispers: Ag₂Cu₂P₂O₈ (1 mol% Ag) | kontinuierlich: Cu₄P₂O₉ dispers: Ag₂Cu₂P₂O₈ (5 mol% Ag) | kontinuierlich: Cu₄P₂O₉ dispers: Ag₂Cu₂P₂O₈ (10 mol% Ag) | Ag₂Cu₃P₂O₉ | Ag₂Cu₂P₂O₈ | Cu₄P₂O₉ |
| Leitfähige Additive der Kathode | Graphit (3 Gew.%) und Carbonfasern (2 Gew.%) | | | | | |
| Bindemittel der Kathode | Polytetrafluoroethylen (3 Gew.%) | | | | | |
| Elektrolyt | 1-molare Lösung von LiClO₄ in einer Mischung von 1,2-Dimethoxyethan, Ethylencarbonat und Propylencarbonat (4:4:2). | | | | | |
| Anode | Lithium | | | | | |

Die Anteile (in Gew.%) der leitfähigen Additive und des Bindemittels der Kathoden beziehen sich auf die Gesamtmasse von Aktivmaterial, leitfähigen Additiven und Bindemittel der jeweiligen Kathode.

In den Aktivmaterialien der Kathoden der Ausführungsbeispiele 1 bis 3 ist eine Phase der Zusammensetzung Ag₂Cu₂P₂O₈ (Ia) entsprechend dem angegebenen prozentualen Anteil an Silber feindispers in einer kontinuierlichen Phase der Zusammensetzung Cu₄P₂O₉ (IIa) verteilt. Die prozentualen Anteile (in mol%) des jeweiligen Aktivmaterials an Silber beziehen sich auf den Gehalt des im Aktivmaterial Verbindung (IIa) enthaltenen Kupfers. Beim Entladevorgang werden die Metallionen beider Verbindungen, (Ia) und (IIa), reduziert.

Die Aktivmaterialien der Kathoden der Ausführungsbeispiele 1 bis 3 werden nach einem Verfahren umfassend die folgenden Schritte hergestellt:
- Bereitstellen einer Mischung der Edukte Kupferoxid, Diammoniumhydrogenphosphat und Silbernitrat in stöchiometrischen Mengen gemäß der gewünschten Zusammensetzung, wobei die zu ersetzenden Kupfer-Ionen durch die ladungsäquivalente Menge an Silber-Ionen substituiert werden
- Homogenisieren der Mischung
- Tempern der homogenisierten Mischung für 48 Stunden bei 160°C in Porzellan-, Korund- oder Quarzglastiegel
- Homogenisieren und gegebenenfalls Zerkleinern der Mischung
- Tempern für 48 Stunden bei 290°C
- Homogenisieren und gegebenenfalls Zerkleinern der Mischung
- weiteres Tempern bei 600°C bis 800°C für 10 bis 20 Tage zum Erhalt eines Materials der gewünschten Zusammensetzung, insbesondere
   - für einen Silbergehalt von 1 mol%: 16 Tage bei 750°C (Ausführungsbeispiel 1)
   - für einen Silbergehalt von 5 mol%: 13 Tage bei 750°C (Ausführungsbeispiel 2)
   - für einen Silbergehalt von 10 mol%: 14 Tage bei 700°C (Ausführungsbeispiel 3) dabei in allen Fällen Homogenisieren der Mischung an jeden bis jeden fünften Tag (vorzugsweise jeden dritten Tag)
- nach Abschluss der thermischen Behandlung nochmaliges Homogenisieren und gegebenenfalls Zerkleinern der Mischung.

Die reine Phase mit der Zusammensetzung Ag₂Cu₂P₂O₈ (Ia) bzw. Ag₂Cu₃P₂O₉ (Ib), welche in der Kathode der Ausführungsbeispiel 4 bzw. 5 das Aktivmaterial der Kathode bildet, wird nach einem Verfahren umfassend die folgenden Schritte hergestellt:
- Bereitstellen einer Mischung umfassend die Edukte z.B. Kupferoxid, Diammoniumhydrogenphosphat und Silbernitrat in stöchiometrischen Mengen gemäß der Summenformel der gewünschten Phase
- Homogenisieren der Mischung
- Tempern der homogenisierten Mischung für 48 Stunden bei 160°C in einem Porzellan-, Korund- oder Quarzglastiegel
- Homogenisieren und gegebenenfalls Zerkleinern der Mischung
- Tempern für 48 Stunden bei 290°C
- Homogenisieren und gegebenenfalls Zerkleinern der Mischung
- weiteres Tempern zum Erhalt der kontinuierlichen Phase
   - mit der Zusammensetzung (Ia) bei 600°C für 5 bis 15 Tage (vorzugsweise 12 Tage)
      bzw.
   - mit der Zusammensetzung (Ib) bei 670°C für 5 bis 15 Tage (vorzugsweise 12 Tage),
   dabei in beiden Fällen Homogenisieren der Mischung an jeden bis jeden fünften Tag (vorzugsweise an jeden dritten Tag)
- nach Abschluss der thermischen Behandlung nochmaliges Homogenisieren und gegebenenfalls Zerkleinern der Mischung.

Die Kathoden der Ausführungsbeispiele 1 bis 5 und des Vergleichsbeispiels wurden wie folgt hergestellt:
- Trockenes Mischen des Aktivmaterials mit den entsprechenden Mengen der leitfähigen Additive und des Bindemittels zu einer homogenen Mischung
- Kompaktierung der homogenen Mischung mittels eines Stempel/Matrize-Verfahrens
- Vakuumtrocknung bei 140 - 180°C über mindestens 8 Stunden.

Die Batterien der Ausführungsbeispiele 1 bis 5 und des Vergleichsbeispiels 1 wurden hinsichtlich ihrer Entladungscharakteristik im Grundlastbetrieb mit einer Last von 100 kOhm und im Pulsbetrieb (Pulsstrom 2 mA/cm², Pulsdauer 2 s) untersucht. Außerdem wurde die Veränderung des Innenwiderstands mit der entnommenen Strommenge (Kapazität) verfolgt. Die Ergebnisse dieser Untersuchungen sind in den Figuren 1 bis 6 dargestellt.

In den Figuren 1 und 4 ist zu erkennen, dass die erfindungsgemäßen Batterien der Ausführungsbeispiele 1 bis 5 sowohl am Beginn als auch im weiteren Verlauf des Entladevorgangs eine höhere Zellspannung aufweisen als die nicht erfindungsgemäße Batterie des Vergleichsbeispiels. Dies gilt auch für die Entladung bei Pulsbelastung, siehe Figuren 2 und 5. Je höher der Anteil des Aktivmaterials der Kathode an Ag₂Cu₂P₂O₈ (Ia) bzw. Ag₂Cu₃P₂O₉ (Ib), desto größer ist der Kapazitätsbereich, in welchem die Spannung trotz Pulsbelastung nicht unter 2,6 V sinkt.

Die Figuren 3 und 6 zeigen, dass der Innenwiderstand der erfindungsgemäßen Batterien zu Beginn der Entladung wegen des gebildeten metallischen Silbers deutlich schneller abfällt als beim Vergleichsbeispiel 1.

## Patentansprüche

1. Material, insbesondere Aktivmaterial für eine Elektrode eines galvanisches Elements,
- umfassend eine oder mehrere Verbindungen der Zusammensetzung
MeₓCu_{n-x/2}P₂O₅₊ₙ (I),
- wobei gilt:
- wobei gilt:
- Me ist ein einwertiges Metall, z.B. Silber
- 1 < x < 6
- 1 < n < 6
- n > x,
weiterhin umfassend eine oder mehrere Verbindungen der Zusammensetzung CuₘP₂O₅₊ₘ (II), wobei gilt: 1 < m < 6.

2. Material nach Anspruch 1, **dadurch gekennzeichnet, dass** das Material
- eine kontinuierliche Phase der Zusammensetzung CuₘP₂O₅₊ₘ (II) wie in Anspruch 1 definiert und
- eine oder mehrere disperse Phasen der Zusammensetzung MeₓCu_{n-x/2}P₂O₅₊ₙ (I) wie in Anspruch 1 definiert
umfasst oder aus
- einer kontinuierlichen Phase der Zusammensetzung CuₘP₂O₅₊ₘ (II) wie in Anspruch 1 definiert und
- einer oder mehreren dispersen Phasen der Zusammensetzung MeₓCu_{n-x/2}P₂O₅₊ₙ (I) wie in Anspruch 1 definiert
besteht.

3. Material nach einem der Ansprüche 1 oder 2, **dadurch gekennzeichnet, dass** das Material
- eine kontinuierliche Phase der Zusammensetzung Cu₄P₂O₉ (IIa) sowie
- eine disperse Phase der Zusammensetzung Ag₂Cu₂P₂O₈ (Ia) und/oder eine disperse Phase der Zusammensetzung Ag₂Cu₃P₂O₉ (Ib)
umfasst oder aus
- einer kontinuierlichen Phase der Zusammensetzung Cu₄P₂O₉ (IIa) sowie
- einer dispersen Phase der Zusammensetzung Ag₂Cu₂P₂O₈ (Ia) und/oder einer dispersen Phase der Zusammensetzung Ag₂Cu₃P₂O₉ (Ib)
besteht.

4. Material nach ein Anspruch 3, **dadurch gekennzeichnet, dass** der Anteil des Silbers in der dispersen Phase der Zusammensetzung (Ia) bzw. (Ib) 1 mol% bis 10 mol%, bevorzugt 5 mol% beträgt, bezogen auf den Gehalt an Kupfer in der kontinuierlichen Phase der Zusammensetzung (IIa).

5. Verwendung eines Materials nach einem der Ansprüche 1 bis 4 als Aktivmaterial für eine Elektrode eines galvanischen Elements.

6. Verwendung einer chemischen Verbindung der Zusammensetzung MeₓCu_{n-x/2}P₂O₅₊ₙ (I), wobei gilt:
- Me ist ein einwertiges Metall, z.B. Silber
- 1 < x < 6
- 1 < n < 6
- n > x
als Bestandteil eines Aktivmaterials nach einem der Ansprüche 1 bis 4 für eine Elektrode eines galvanischen Elements.

7. Verwendung nach Anspruch 6, wobei die chemische Verbindung der Zusammensetzung MeₓCu_{n-x/2}P₂O₅₊ₙ (I) aus der Gruppe bestehend aus Ag₂Cu₂P₂O₈ (Ia) und Ag₂Cu₃P₂O₉ (Ib) ausgwählt ist.

8. Verfahren zur Herstellung eines Materials wie in einem der Ansprüche 3 und 4 definiert
umfassend die Schritte:
- Bereitstellen einer Mischung umfassend die Edukte
- Kupferoxid CuO
- ein Phosphat-Ionen enthaltendes thermisch zersetzbares Salz, z.B. Diammoniumhydrogenphosphat
- eine Silberverbindung
in einer der gewünschten Zusammensetzung entsprechenden Stöchiometrie
- Homogenisieren der Mischung,
- ein- oder mehrstufiges thermisches Behandeln der Mischung, wobei die Anzahl, die jeweilige Dauer und die jeweilige Temperatur der Stufen der thermischen Behandlung so gewählt sind, dass ein Material wie in einem der Ansprüche 3 und 4 definiert gebildet wird,
- ggf. Homogenisieren der thermisch behandelten Mischung.

9. Mischung zur Herstellung einer Elektrode für ein galvanisches Element, bestehend aus oder umfassend
(i) ein Aktivmaterial wie in einem Ansprüche 1 bis 4 definiert sowie
(ii) ein oder mehrere leitfähige Additive
und/oder
(iii) ein oder mehrere Bindemittel
sowie
(iv) optional ein oder mehrere Dispergiermittel.

10. Galvanisches Element, vorzugsweise Batterie, insbesondere zur Stromversorgung eines medizinischen Implantats mit elektronischen Komponenten, umfassend eine Elektrode bestehend aus oder umfassend
- eine Mischung wie in Anspruch 9 definiert, oder
- ein Aktivmaterial wie in einem Ansprüche 1 bis 4 definiert.

11. Galvanisches Element nach Anspruch 10, **dadurch gekennzeichnet, dass** das galvanische Element als zweite Elektrode eine Elektrode bestehend aus oder enthaltend metallisches Lithium als Aktivmaterial enthält.

12. Medizinisches Implantat, insbesondere zur Herztherapie, umfassend ein galvanisches Element, vorzugsweise eine Batterie, nach Anspruch 10 oder 11.

## Claims

1. A material, in particular an active material for an electrode of a galvanic element,
- comprising one or more compounds of the composition MeₓCu_{n-x/2}P₂O₅₊ₙ (I),
- wherein the following applies:
- Me is a monovalent metal, for example silver,
- 1 < x < 6,
- 1 < n < 6, and
- n > x,
further comprising one or more compounds of the composition CuₘP₂O₅₊ₘ (II), wherein: 1 < m < 6.

2. The material according to Claim 1, **characterised in that** the material comprises
- a continuous phase of the composition CuₘP₂O₅₊ₘ (II) as defined in Claim 1, and
- one or more disperse phases of the composition MeₓCu_{n-x/2}P₂O₅₊ₙ (I) as defined in Claim 1
or consists of
- a continuous phase of the composition CuₘP₂O₅₊ₘ (II) as defined in Claim 1,
and
- one or more disperse phases of the composition MeₓCu_{n-x/2}P₂O₅₊ₙ (I) as defined in Claim 1.

3. The material according to one of Claims 1 or 2, **characterised in that** the material comprises
- a continuous phase of the composition Cu₄P₂O₉ (IIa) and
- a disperse phase of the composition Ag₂Cu₂P₂O₈ (Ia) and/or a disperse phase of the composition Ag₂Cu₂P₂O₉ (Ib)
or consists of
- a continuous phase of the composition Cu₄P₂O₉ (IIa) and
- a disperse phase of the composition Ag₂Cu₂P₂O₈ (Ia) and/or a disperse phase of the composition Ag₂Cu₃P₂O₉ (Ib).

4. The material according to Claim 3, **characterised in that** the proportion of silver in the disperse phase of the composition (Ia) or (Ib) is 1 mol % to 10 mol %, preferably 5 mol %, in relation to the content of copper in the continuous phase of the composition (IIa).

5. Use of a material according to one of Claims 1 to 4 as active material for an electrode of a galvanic element.

6. Use of a chemical compound of the composition MeₓCu_{n-x/2}P₂O₅₊ₙ (I), wherein the following applies:
- Me is a monovalent metal, for example silver,
- 1 < x < 6,
- 1 < n < 6, and
- n > x,
as component of an active material according to one of Claims 1 to 4 for an electrode of a galvanic element.

7. The use according to Claim 6, wherein the chemical compound of the composition MeₓCu_{n-x/2}P₂O₅₊ₙ (I) is selected from the group consisting of Ag₂Cu₂P₂O₈ (Ia) and Ag₂Cu₃P₂O₉ (Ib).

8. A method for producing a material as defined in one of Claims 3 or 4 comprising the steps of:
- providing a mixture comprising the starting materials
- copper oxide CuO
- a thermally decomposable salt containing phosphate ions, for example diammonium hydrogen phosphate
- a silver compound
in a stoichiometry that is appropriate for the desired composition,
- homogenising the mixture,
- providing a single-step or multi-step thermal treatment of the mixture, wherein the number, the respective duration, and the respective temperature of the steps of the thermal treatment are selected such that a material as defined in one of Claims 3 or 4 is formed,
- homogenising the thermally treated mixture, if necessary.

9. A mixture for producing an electrode for a galvanic element, consisting of or comprising
(i) an active material as defined in one of Claims 1 to 4
and
(ii) one or more conductive additives
and/or
(iii) one or more binding agents,
and
(iv) optionally, one or more dispersing agents.

10. A galvanic element, preferably a battery, in particular for supplying power to a medical implant having electronic components, comprising an electrode consisting of or comprising
- a mixture as defined in Claim 9, or
- an active material as defined in one of Claims 1 to 4.

11. The galvanic element according to Claim 10, **characterised in that** the galvanic element as second electrode contains an electrode consisting of or containing metallic lithium as active material.

12. A medical implant, in particular for heart therapy, comprising a galvanic element, preferably a battery, according to Claim 10 or 11.

## Revendications

1. Matériau, notamment matériau actif pour une électrode d'un élément galvanique,
- comprenant un ou plusieurs composés de la composition MeₓCu_{n-x/2}P₂O₅₊ₙ (I),
- où
- Me est un métal monovalent, par exemple, l'argent
- 1 < x < 6
- 1 < n < 6
- n > x,
comprenant en outre un ou plusieurs composés de la composition CuₘP₂O₅₊ₙ (II), où l'on a : 1 < m < 6.

2. Matériau selon la revendication 1, **caractérisé en ce que** le matériau est comprend
- une phase continue de la composition CuₘP₂O₅₊ₘ (II) telle que définie en revendication 1, et
- une ou de plusieurs phases dispersées de la composition MeₓCu_{n-x/2}P₂O₅₊ₙ (I) telle que définie en revendication 1, ou est constitué
- d'une phase continue de la composition CuₘP₂O₅₊ₘ (II) telle que définie en revendication 1 et
- d'une ou de plusieurs phases dispersées de la composition MeₓCu_{n-x/2}P₂O₅₊ₙ (I) telle que définie en revendication 1.

3. Matériau selon l'une des revendications 1 ou 2, **caractérisé en ce que** le matériau comprend
- une phase continue de la composition Cu₄P₂O₉ (IIa) ainsi
- qu'une phase dispersée de la composition Ag₂Cu₂P₂O₈ (Ia) et/ou une phase dispersée de la composition Ag₂Cu₃P₂O₉ (Ib), ou est constitué
- d'une phase continue de la composition Cu₄P₂O₉ (IIa) ainsi que
- d'une phase dispersée de la composition Ag₂Cu₂P₂O₈ (Ia) et/ou d'une phase dispersée de la composition Ag₂Cu₃P₂O₉ (Ib).

4. Matériau selon une revendication 3, **caractérisé en ce qu'**une partie de l'argent dans la phase dispersée de la composition (Ia), respectivement (Ib), se situe entre 1% en moles et 10% en moles, de préférence à 5% en moles, par rapport à la teneur en cuivre dans la phase continue de la composition (IIa).

5. Utilisation d'un matériau selon l'une des revendications 1 à 4 en tant que matériau actif pour une électrode d'un élément galvanique.

6. Utilisation d'un composé chimique de la composition MeₓCu_{n-x/2}P₂O₅₊ₙ (I), où :
- Me est un métal monovalent, par exemple, l'argent
- 1 < x < 6
- 1 < n < 6
- n > x
en tant que composant d'un matériau actif selon l'une des revendications 1 à 4 pour une électrode d'un élément galvanique.

7. Utilisation selon la revendication 6, où le composé chimique de la composition MeₓCu_{n-x/2}P₂O₅₊ₙ (I) est choisi dans le groupe constitué d'Ag₂Cu₂P₂O₈ (Ia) et d'Ag₂Cu₃P₂O₉ (Ib).

8. Procédé de fabrication d'un matériau tel que défini dans l'une des revendications 3 et 4,
comprenant les étapes de :
- mise à disposition d'un mélange comprenant les produits de départ
- oxyde de cuivre CuO
- un sel contenant des ions phosphates dégradable thermiquement, par exemple, l'hydrogénophosphate de diammonium
- un composé d'argent
dans une stoechiométrie correspondant à la composition souhaitée
- homogénéisation du mélange,
- traitement thermique du mélange en une ou plusieurs étapes, où le nombre, la durée respective et la température respective des étapes du traitement thermique sont choisis de sorte qu'un matériau tel que défini dans l'une des revendications 3 et 4 est formé,
- éventuellement, homogénéisation du mélange traité thermiquement.

9. Mélange pour la fabrication d'une électrode pour un élément galvanique, constitué de ou comprenant
(i) un matériau actif tel que défini dans l'une des revendications 1 à 4
ainsi
(ii) qu'un ou plusieurs additifs conducteurs
et/ou
(iii) un ou plusieurs liants
ainsi
(iv) qu'en option, un ou plusieurs dispersants.

10. Elément galvanique, de préférence, batterie, notamment pour l'approvisionnement en courant d'un implant médical avec des composants électroniques, comprenant une électrode constituée de ou comprenant
- un mélange tel que défini en revendication 9, ou
- un matériau actif tel que défini dans une des revendications 1 à 4.

11. Elément galvanique selon la revendication 10, **caractérisé en ce que** l'élément galvanique contient en tant que deuxième électrode une électrode constituée de ou contenant du lithium métallique en tant que matériau actif.

12. Implant médical, notamment pour la thérapie cardiaque, comprenant un élément galvanique, de préférence une batterie, selon les revendications 10 ou 11.
